# EUROPEAN PATENT SPECIFICATION

(11) **EP 0 491 546 B1**
(45) Date of publication and mention of the grant of the patent: **26.07.1995**
(21) Application number: 91311680.2
(22) Date of filing: 17.12.1991
(51) Int. Cl.: H02K 44/06

(54) **A converged magnetic flux type intense magnetic field electro-magnetic pump**
Elektromagnetische Pumpe mit starkem magnetischen Feld des Typs mit konvergierendem magnetischen Fluss
Pompe électromagnétique à champ magnétique intense du type à flux magnétique convergeant

(30) Priority: 17.12.1990 JP 411103/90; 15.11.1991 JP 300416/91
(43) Date of publication of application: 24.06.1992
(73) Proprietor: KANAZAWA UNIVERSITY, Kanazawa City Ishikawa Pref. (JP)
(72) Inventor: Bessho, Kazuo, Kanazawa City, Ishikawa Pref. (JP)
(74) Representative: Godwin, Edgar James

(56) References cited:
- EP-A- 0 383 457
- EP-A- 0 446 075
- GB-A- 831 399

## Description

The present invention relates to an electro-magnetic pump for conveying molten metal through a pipe by electro-magnetically applying a thrust thereon from the surroundings around the pipes, particularly, to a converged magnetic flux type intense magnetic field electro-magnetic pump which can powerfully convey molten metal through a pipe applied with a traveling magnetic field which is formed by converging magnetic fluxes induced in the pipe by eddy currents generated by multiphase alternate current exciting coils in metal plates individually inserted between those coils together with magnetic fluxes induced in magnetic material frames surrounding those exciting coils, especially so as to prevent the local overheat and hence to increase the applied exciting voltage, the effective magnetic fluxes and the output thrust on account of the axial dispersion of the eddy currents concentrated into central portions of the metal plates inserted between the exciting coils.

Up to the present, various countries have made extraordinary efforts to the conveyance of high temperature molten metal. Particularly, the development of a large capacity pump of electro-magnetic induction type which is suitable for circulating molten sodium used as a refrigerant of a high speed breeder reactor, which is noteworthy for an energy source of next generation, is treated as an urgent theme of research immediately before the practical utilization of the high speed breeder reactor, and hence the research concerned is advanced as a national task in each advanced countries.

However, in the conventional form of linear induction type electro-magnetic pump, the magnetic flux density of the traveling magnetic field generated in the conveying pipe is small, and hence the output amount of the pump is insufficient. Consequently, the conventional pump of this type can be hardly used for the large capacity, so that the development of an electro-magnetic pump of fresh type is internationally expected.

That is, as for the pump employed for conveying the high temperature molten metal taken out from a blast furnace, particularly, for circulating molten sodium used as a refrigerant of high speed breeder reactor, a conventional rotary blade type pump is questionable with regard to the safety in the continuous long run, so that, under the present condition, a linear induction type electro-magnetic pump is regarded as the most suitable and hence various forms of the pump of this type have been developed and further those of small capacity are already used in practice.

However, in the conventional forms of the linear induction type electro-magnetic pump, the magnetic flux density in the conveying pipe is comparatively small, that is, no more than about 3,000 gauss, and hence the sufficient thrust can be hardly obtained and the output amount of the pump of this type is insufficient, so that it is difficult to realize the electro-magnetic pump of large capacity.

Consequently, the present inventor proposed a converged magnetic flux type electro-magnetic pump according to EP-A-0 446 075 and then developed an electro-magnetic pump of this type in which the effect of the conveyance of molten metal was remarkably improved in comparison with that of the conventional one. However, this developed pump was somewhat questionable in its use as a large capacity pump. So, removal of this difficulty and hence the further improvement of the effect have been necessarily expected.

It would therefore be desirable to be able to remove the above-mentioned difficulty and to provide an electro-magnetic pump of sufficiently large capacity by further improving the effect of the above developed converged magnetic flux type electro-magnetic pump.

It would also be desirable to be able to provide a new large-sized electro-magnetic pump having a high efficiency and a large capacity by further improving the converged magnetic flux type electro-magnetic pump and by making the best of the effect thereof, which was developed by remarkably improving the conventional electro-magnetic pump having a low magnetic flux density of the induced traveling magnetic field and hence an insufficient thrust and output amount being endurable for the use of comparatively small capacity.

The present invention is, with regard to a converged magnetic flux type electro-magnetic pump which is arranged such that exciting spiral coils and circular conductor plates provided with radial slots individually are alternately stacked and the stack is surrounded by magnetic frames formed, for instance, of laminated iron plates and further a non-magnetic pipe passing successively through central holes of the circular conductor plates is provided, to increase the thickness of central portions of the circular conductor plates surrounding the central holes thereof so as to form the radial crosssection in T-shape and to increase the diameters of those central holes and the non-magnetic pipe passing through those central holes, so as to provide another non-magnetic pipe having a smaller diameter through the above mentioned pipe having the increased diameter and hence to form a double pipe, such as molten metal is conveyed through an inner gap of the double pipe, and further, inside the inner pipe, to arrange members formed, for instance, of cylindrical magnetic cores for converging in a high density magnetic fluxes of a traveling magnetic field induced inside the inner pipe, or, inner alternate stacks of exciting spiral coils and annular conductor plates and inner magnetic frames surrounding those inner stacks which correspond respectively to the outer alternate stacks of exciting spiral coils surrounding the outer pipe and circular conductor plates having the T-shaped radial crosssection with increased thickness of central portions and outer magnetic frames surrounding those outer stacks, so as to prevent the local concentration of magnetic fluxes into the inner gap of the double pipe and hence to facilitate the uniformly increased magnetic flux density.

In other words, a converged magnetic flux type intense magnetic field electro-magnetic pump according to the present invention is featured by comprising a plurality of exciting spiral coils wound in the same polarity and engaged to each other, a plurality of circular conductor plates inserted individually between said plurality of exciting spiral coils and provided individually with radial slits reaching outer peripheries thereof and central holes coaxially conducted to each other in common a plurality of substantially U-shaped magnetic frames surrounding individually outer peripheries of crosssections of said exciting spiral coils and said circular conductor plates for forming closed magnetic circuits through said central holes, so as to individually provide unitary magnetic flux generating elements, a plurality of the unitary magnetic flux generating elements being arranged close to each other in the axial direction of said central holes, axially traveling magnetic fluxes being generated in said central holes conducted to each other by converging eddy currents generated in said circular conductor plate in response to multiphase alternate currents applied to said exciting spiral coils into the central portions surrounding said central holes along said radial slits, other traveling magnetic fluxes generated in said closed magnetic circuits formed of said magnetic frames being superposed in phase on said traveling magnetic fluxes in said central holes, and the mutually superposed magnetic fluxes being converged by coaxially providing magnetic flux converging members partially forming said closed magnetic circuits inside a non-magnetic pipe passing through said central holes conducted to each other, so as to apply an axial thrust on molten metal in said non-magnetic pipe, and especially featured by increasing the thickness of the central portions of said circular conductor plates, so as to form the radial cross-section substantially in T-shape.

Consequently, according to the present invention, in the converged magnetic flux type electro-magnetic pump previously proposed by the present inventor, the effect of which is remarkably improved in comparison with that of the conventional form of annular induction type electro-magnetic pump by surrounding plural exciting spiral coils and plural circular conductor plates alternately stacked to each other with magnetic frames and by generating the traveling magnetic field having high magnetic flux density in the central holes of the circular conductor plates according to the concentration of eddy currents through the applied multiphase alternate voltage, the concentrated eddy currents are dispersed in the axial direction according to the increased thickness of central portions of the circular conductor plates, and, as a result, any local overheat can be prevented and the applied voltage, the effective magnetic fluxes and the output thrust can be increased, so as to facilitate the further improvement of the efficiency and the peculiarity of the conveyance of molten metal.

In other words, according to the present invention, the radial crosssection of the portion of the eddy current generating circular conductor plate, which portion is in contact with the pipe for conveying high temperature molten metal, is formed in T-type, so that the local overheat caused by the eddy currents concentrated in the portion concerned can be prevented and hence the increase of output thrust can be facilitated by reducing the loss and raising the applied voltage and further the axial thrust effecting on molten metal can be increased by the increase of effective magnetic fluxes in the double pipe, that is, the radial magnetic fluxes according to the decrease of leakage magnetic fluxes. As a result, the large-scaled electro-magnetic pump suitably used for the conveyance of high temperature molten metal, the circulation of molten sodium for refrigerating the high speed breeder reactor and the driving of the magnetic accelerator can be realized.

In this connection, the above mentioned operational effects of the present invention can be obtained with regard to the pump of comparatively small capacity also, in which the magnetic flux converging member in the molten metal conveying pipe is formed of a cylindrical magnetic core, similarly as with regard to the pump of large capacity, in which the actively effecting magnetic flux converging member is employed.

For the better understanding of the invention, reference is made to the accompanying drawings, in which
Fig. 1 is a side crosssectional view showing a conventional converged magnetic flux type electro-magnetic pump;
Fig. 2 is a crosssectional elevation showing the same;
Fig. 3 is an elevation showing an exciting spiral coil of the same;
Fig. 4 is an elevation showing a circular conductor plate of the same;
Fig. 5 is a perspective view showing a partly broken appearance of the same;
Fig. 6 is an elevation and a side crosssectional view showing a circular conductor plate of a converged magnetic flux type intense magnetic field electro-magnetic pump according to the present invention;
Fig. 7 is an elevation and a side crosssectional view showing an exciting spiral coil of the same;
Fig. 8 is a crosssectional elevation of the first embodiment of the same;
Fig. 9 is a side sectional view showing the first embodiment of the same;
Fig. 10 is a perspective view showing a partly broken appearance of the first embodiment of the same;
Fig. 11 is a crosssectional elevation showing the second embodiment of the same;
Fig. 12 is a combination of a side view and a side crosssectional view showing the second embodiment of the same together with a crosssectional view showing a unitary element thereof;
Fig. 13 is a crosssectional elevation showing the third embodiment of the same;
Fig. 14 is a combination of a side view and a side crosssectional view showing the third embodiment of the same together with a crosssectional view showing a unitary element thereof;
Fig. 15 is a perspective view showing a partly broken appearance of the third embodiment of the same;
Fig. 16 is a diagram showing the distribution of eddy currents flowing in the circular conductor plate of the same;
Fig. 17 is a diagram showing the state of magnetic flux distribution in the unitary element of the conventional converged magnetic flux type electro-magnetic pump;
Fig. 18 is a diagram showing the state of magnetic flux distribution in the unitary element of the first embodiment of the converged magnetic flux type intense magnetic field electro-magnetic pump according to the present invention;
Fig. 19 is a diagram showing the state of magnetic flux distribution in the inner unitary element of the third embodiment of the same without the circular conductor plate; and
Fig. 20 is a diagram showing the state of magnetic flux distribution in the inner unitary element of the third embodiment of the same with the circular conductor plate.

Through different views of the drawings,
- 1: exciting spiral coil
- 2: circular conductor plate
- 3: central hole
- 4: slit
- 5: space
- 6: magnetic material frame
- 7: (outer)non-magnetic material pipe
- 8: cylindrical magnetic core
- 9: gap
- 10: surroundings of central hole
- 11: teeth-like portion
- 12: recess
- 13: inner non--magnetic material pipe
- 14: inner magnetic material frame
- 15,16: inner exciting conductor plate
- 18: eddy current

The present invention will be described in detail as for embodiments by referring to accompanying drawings hereinafter.

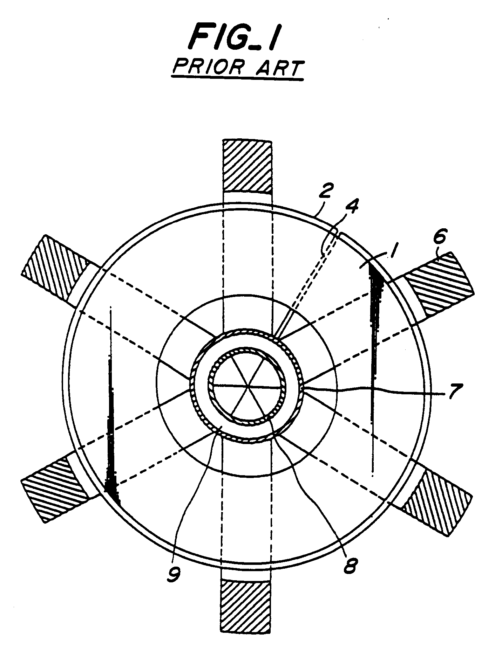

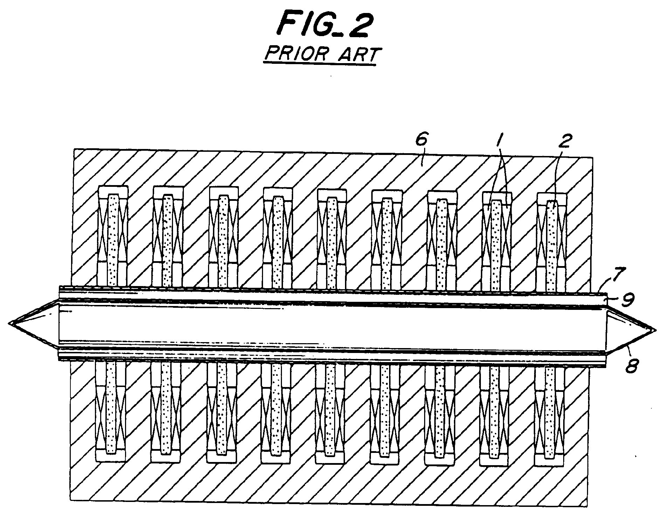

First, "a converged magnetic flux type electro-magnetic pump", which was previously proposed by the present inventor and which is an object to be improved by the present invention, will be described as for an outlined structure thereof by referring to Fig. 1 showing a side crosssectional view thereof and Fig. 2 showing a crosssectional elevation thereof.

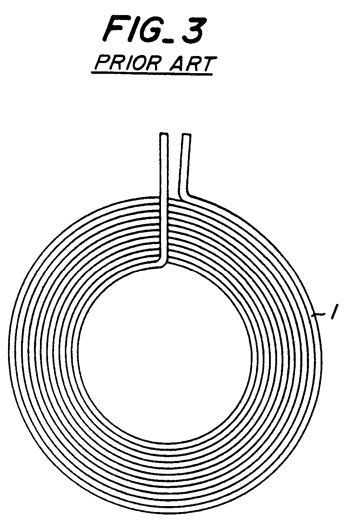

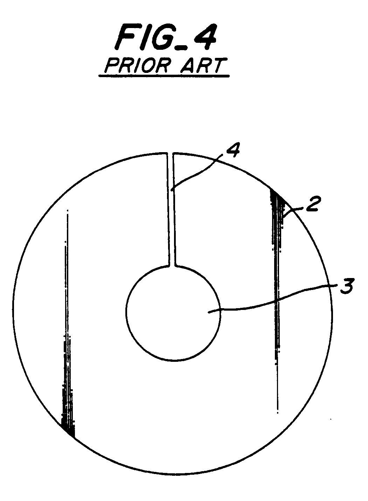

Fig. 1 shows a side crosssectional view being perpendicular to the axis at the boundary between an exciting spiral coil 1 and a circular conductor plate 2 is, while Fig. 2 shows a crosssectional elevation thereof containing the axis. In the structure as shown in these drawings, plural exciting spiral coils 1 which are spirally wound as shown in Fig. 3 individually, and plural eddy current generating circular conductor plates 2 which are provided individually with radial slits 4 reaching outer peripheries from central holes 3 as shown in Fig. 4 are closely stacked with each other alternately, or, plural unitary elements in which each circular conductor plate 2 is stuck between each pair of exciting spiral coils 2 as shown in Fig. 2 are arranged apart from each other. In these structures, which are surrounded by a U shaped magnetic laminated iron plates axial-symmetrically in radial direction, central holes 3 of each circular conductor plates 2 are conducted with each other and a non-magnetic material pipe 7 is inserted therein, and further a cylindrical magnetic material core 8 formed, for instance, of laminated iron plates is inserted in the pipe 7, so as to convey molten metal in a gap 9 between the pipe 7 and the cylindrical core 8.

In the above-mentioned conventional structure of the converged magnetic flux type electro-magnetic pump, when the exciting spiral coils 1 consisting individually in each unitary elements are connected successively to each other in the same polarity and are applied with a three phase alternate voltage, an axial traveling magnetic field induced by eddy currents generated in circular conductor plates 2 and concentrated around the central portions thereof is formed in the gap 9. As a result, eddy currents flow in molten metal in the gap 9, so as to generate a thrust which affects and conveys molten metal in the axial direction as an electro-magnetic pump.

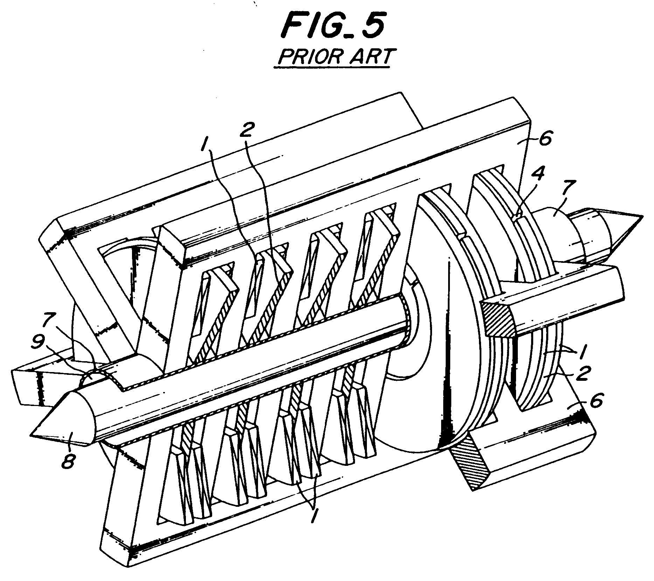

The partly broken appearance of the conventional converged magnetic flux type electro-magnetic pump as arranged as mentioned above is shown in Fig. 5.

According to the present invention, the peculiarity of the converged magnetic flux type electro-magnetic pump as arranged as mentioned above is further improved by deforming the circular conductor plates 2, particularly, by deforming the central portions thereof and by doubly arranging the molten metal conveying non-magnetic material pipe, such as unitary elements similar as those arranged around the outer pipe are provided in the inner pipe in correspondence with each other, so as to generate a traveling magnetic field of high magnetic flux density, which is uniformly distributed in the gap between outer and inner pipes.

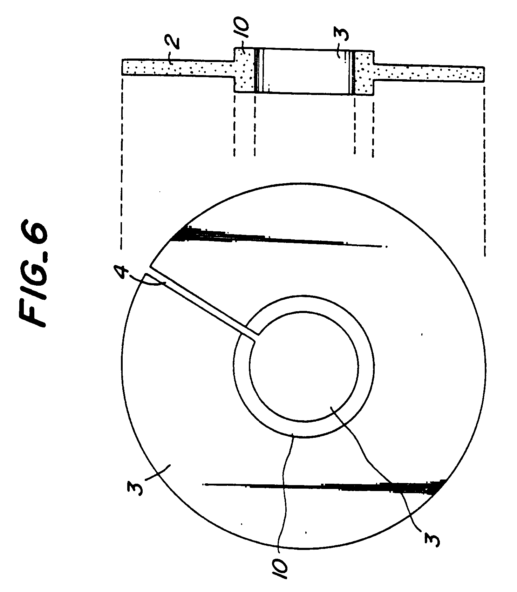

The elevation and the crosssection of the circular conductor plate 2 of the first embodiment of a converged magnetic flux type intense magnetic field electro-magnetic pump as arranged as mentioned above according to the present invention are shown in Fig. 6. As for the circular conductor plate 2 as shown in Fig. 6, the thickness of the surrounding portions 10 of the central hole 3 is extremely increased in comparison with that of remaining portions, so as to arrange the radial crosssection thereof as T-shape.

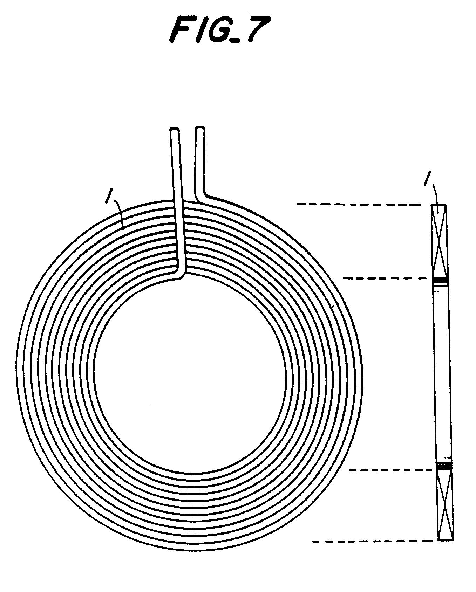

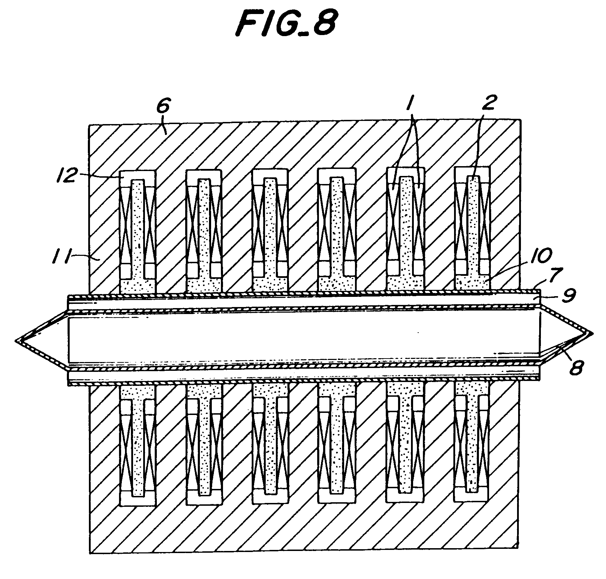

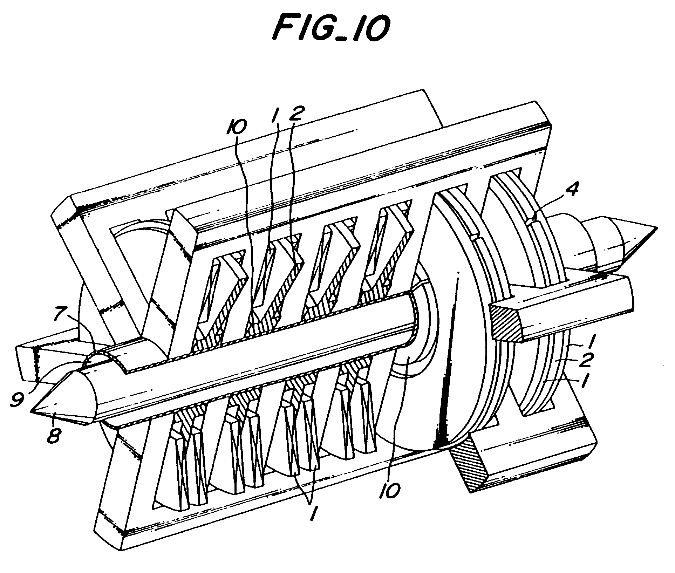

On both sides of the circular conductor plate 2 arranged mentioned above, a pair of exciting spiral coils 1, the central spaces of which are slightly larger than the surrounding portion 10 of the circular conductor plate 2 as shown in Fig. 7, are combined with the circular conductor plate 2 as shown in the crosssectional elevation of Fig. 8 and in the perspective appearance of Fig. 10 as for the unitary element.

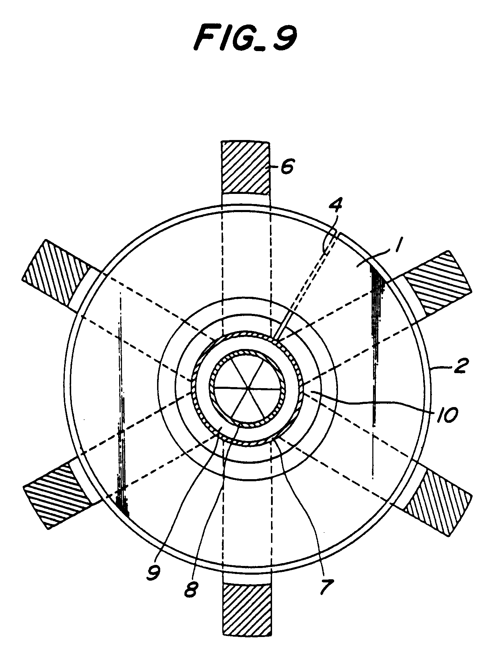

In this connection, a side crosssectional view of the above mentioned combination is shown in Fig. 9 similarly as shown in Fig. 1.

As apparent from these related drawings, in the first embodiment of the intense magnetic field electro-magnetic pump according to the present invention, plural unitary elements as mentioned above are arranged in the axial direction and these arranged unitary elements are surrounded by a magnetic material frame 6 which is provided with teeth-like portions 11 and recesses 12 individually in the radial direction for each unitary elements and is formed, for instance, of laminated iron plates, while the central holes 3 of each circular conductor plates 2 are conducted with each other and are provided with a non-magnetic metal pipe 7 therein, in which pipe 7 a cylindrical magnetic core 8 formed of ferromagnetic material is coaxially arranged, so as to convey molten metal through a gap 9 between the pipe 7 and the core 8.

In the above mentioned arrangement, when the exciting spiral coils 1 consisting in each unitary elements are appropriately connected in series and a three phase alternate voltage is applied on both ends of the series connection of coils 1, a uniformly distributed traveling magnetic field of high magnetic flux density is generated in the gap 9, and, as a result, an intense thrust in the axial direction is generated by the interaction between this traveling magnetic field and eddy currents generated in molten metal, so as to realize an electro-magnetic pump for conveying molten metal.

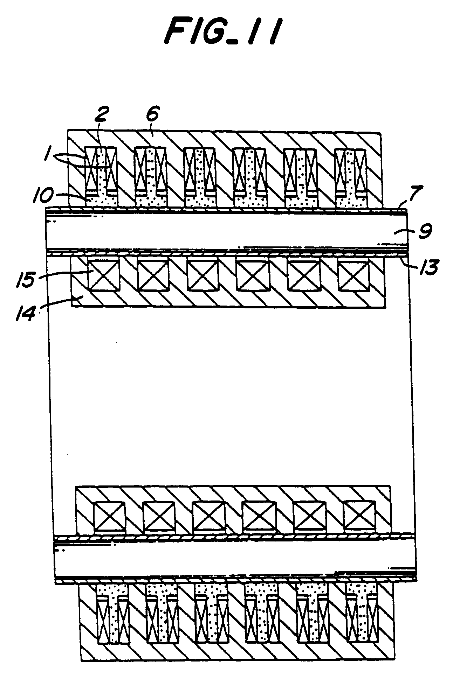

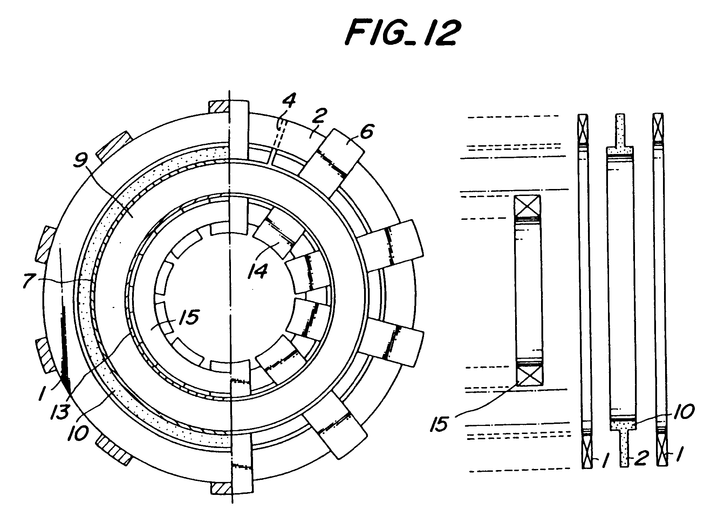

Next, as for the second embodiment of the converged magnetic flux type intense magnetic field electro-magnetic pump according to the present invention, a crosssectional elevation thereof is shown in Fig. 11 similarly as in Fig. 8, while a combination of side view and side crosssectional view thereof is shown in Fig. 12 together with a crosssectional view of the unitary element. In this embodiment as shown in these drawings, which is arranged such as the intense magnetic field electro-magnetic pump of the present invention can be applied for the use of large capacity, the diameter of the non-magnetic material pipe 7 is extremely increased in comparison with that as shown in Fig. 8 and an inner non-magnetic material pipe 13 having a diameter being appropriately smaller than that of the pipe 7 is coaxially arranged therein, so as to form a double structure of pipes, in a gap 9 formed between which pipes 7 and 13 molten metal is conveyed, while inside which pipe 13 exciting spiral coils 15 individually surrounded in the radial direction by laminated iron cores 14 individually in correspondence to each unitary elements arranged outside the outer pipe 7 are arranged and are connected in series to corresponding outer exciting spiral coils 1 respectively, such as both of traveling magnetic fields generated by both of exciting spiral coils 1, 15 respectively at the application of three phase alternate voltage are superposed in phase with each other, so as to obtain a uniform and intense traveling magnetic field and hence to realize an electro-magnetic pump suitable for the use of remarkably larger capacity than that of the first embodiment.

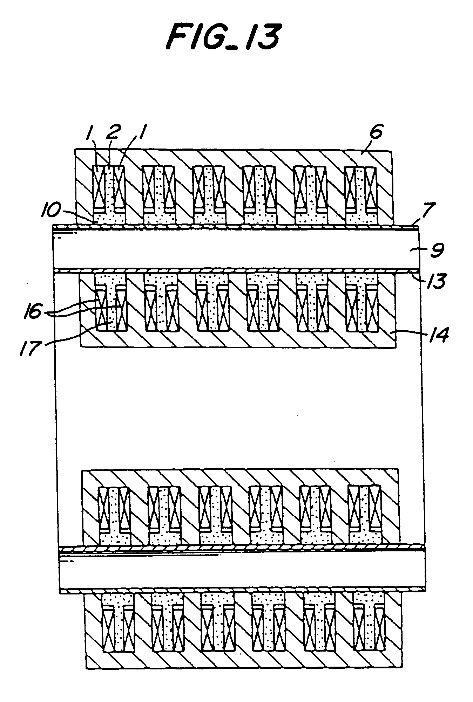

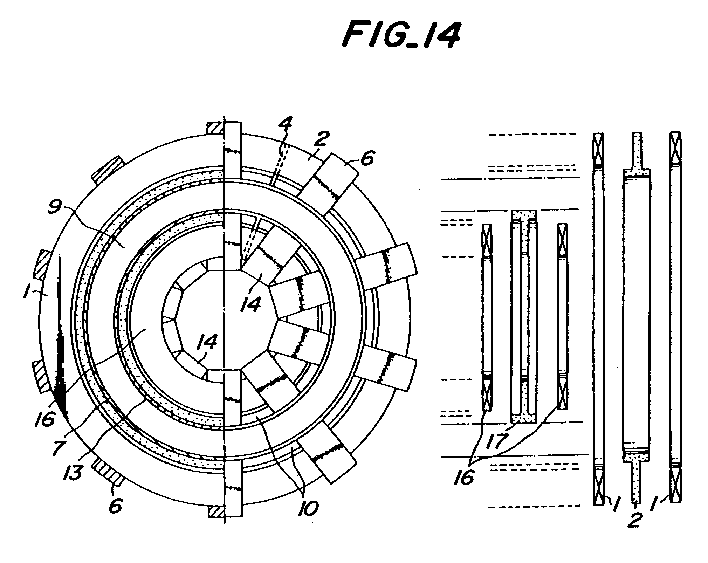

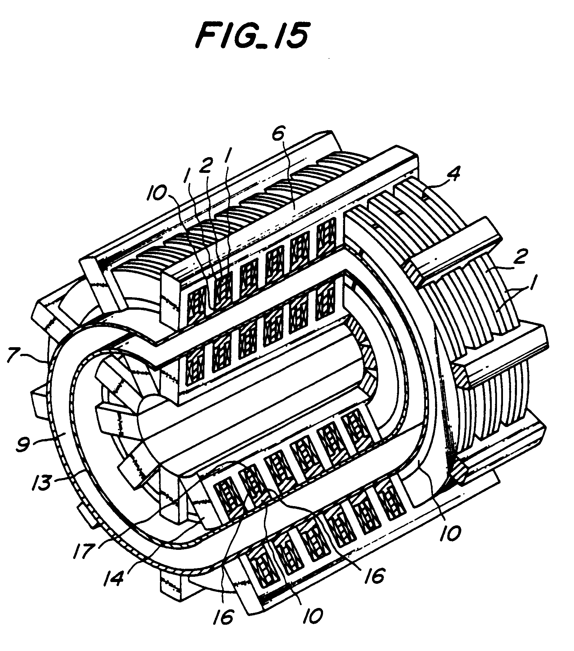

Next, as for the third embodiment of the present invention which is suitable for the use of further larger capacity, a crosssectional elevation and a combination of a side view and a side crosssectional view, which are similar to Fig. 11 and Fig. 12 showing the second embodiment, are shown in Fig. 13 and Fig. 14 respectively, while a partly broken appearance thereof similar to Fig. 10 showing that of the first embodiment is shown in Fig. 15.

In the third embodiment as shown in these drawings, inside the inner pipe 13 of the molten metal conveying double-structured pipe which is arranged similarly as in the aforesaid second embodiment, the laminated iron core 14 is arranged also similarly as in the second embodiment, in each recesses 12 of which inner unitary elements individually corresponding to outer unitary elements arranged outside the outer pipe 7 in symmetry and formed similarly as the latter, that is, inner circular conductor plates 17 having the increased thickness of peripheral portions in contact with the inner pipe 13 such as the radial crosssection thereof is T-shaped and individually stuck by each pairs of inner exciting spiral coils 16 are arranged respectively. In thus arranged structure, mutually corresponding outer and inner exciting spiral coils 1 and 16 are connected in series to each other respectively, such as traveling magnetic fields respectively generated by those exciting spiral coils 1 and 16 at the application of three phase alternate voltage are superposed in phase with each other, so as to obtain a further intense and uniform traveling magnetic field.

In the converged magnetic flux type intense magnetic field electro-magnetic pump according to the present invention as arranged as described above in detail, for example, in the first embodiment thereof, when the exciting spiral coils individually consisting in each unitary elements are appropriately connected with each other and are applied with three phase alternate voltage, the traveling magnetic field is generated in the non-magnetic material pipe surrounded by those exciting spiral coils, and, as a result, the thrust generated by the interaction between this traveling magnetic field and eddy currents induced in molten metal in the pipe is applied onto molten metal, so as to realize an intense electro-magnetic pump. In this situation, a new eddy currents flow in the circular conductor plates individually stuck between each exciting spiral coils, and, as a result, the leakage magnetic fluxes are reduced, while the effective magnetic fluxes in the gap between the double-structured pipes are increased. Consequently, the thrust applied on molten metal is further increased, so as to rapidly improve the conveying peculiarity of the electro-magnetic pump.

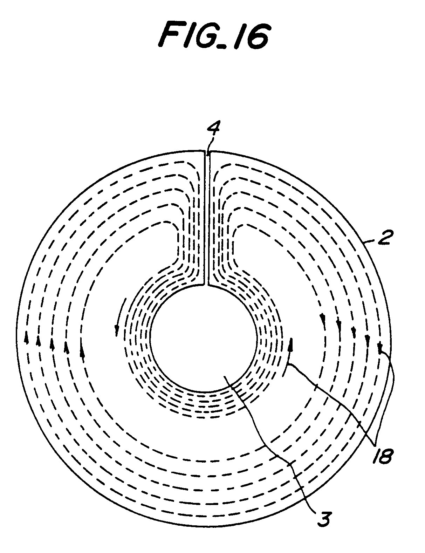

Under these conditions, the eddy currents 18 distributed as shown in Fig. 16 flow in the circular conductor plates 2 and then concentrated in the surrounding portions thereof around the central holes 3 along the slits 4, so as to intercept the leakage magnetic fluxes and hence to efficiently converge the induced magnetic fluxes into the central holes 3.

In this situation, when the thickness of the circular conductor plate is fixed or uniform from the periphery to the central portion, the defect that the concentrated eddy currents flow around the central hole 3 and hence the state of local overheat is caused and the temperature thereon is raised comes into question.

For removing this defect and obtaining an intense traveling magnetic field having high magnetic flux density and uniformly distributed in the axial direction, according to the present invention, the improvement such that the thickness of surrounding portion around the central hole 3 of the circular conductor plate 2 is extremely increased in comparison with that of remaining portions, as shown in Figs. 6, 8, 10 and 13, so as to form the radial crosssection thereof in T-shape is effected, and, as a result, the effective magnetic fluxes in the radial direction in the gap 9 between the double-structured pipes are increased, so as to improve the peculiarity of the electro-magnetic pump as the merit obtained by the present invention.

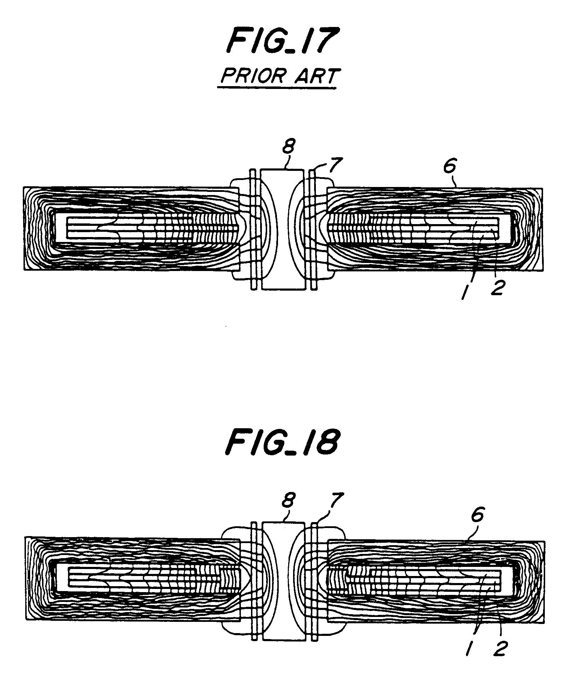

As for the previously proposed converged magnetic flux type electro-magnetic pump, the distribution of magnetic fluxes, which is calculated as to the unitary element in the case that the eddy current inducing circular conductor plate having the uniform thickness is employed, is shown in Fig. 17, while, as for the intense magnetic field electro-magnetic pump according to the present invention, that, which is calculated as to the unitary element in the case that the circular conductor plate having the T-shaped radial crosssection is employed, is shown in Fig. 18. Consequently it is apparent from the comparison of these distributions with each other that it is remarkably effective to increase the thickness of central portion of the circular conductor plate according to the present invention.

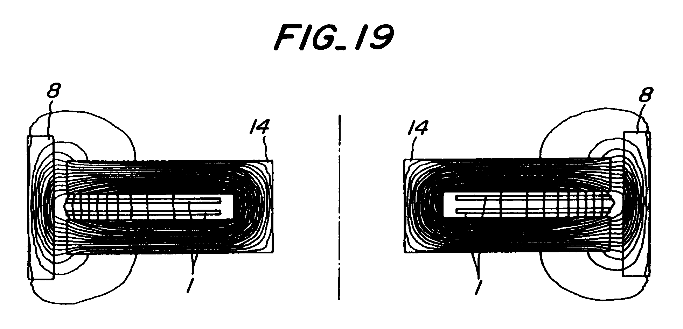

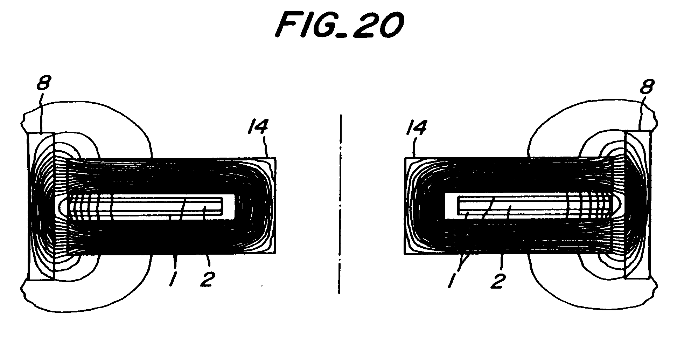

Furthermore, the distribution of magnetic fluxes calculated similarly as mentioned above as for the effect of shielding magnetic fluxes which is obtained by the circular conductor plate in the case that, inside the double-structured pipes in the intense magnetic field electro-magnetic pump according to the present invention also, unitary elements individually corresponding to the outer unitary elements are provided is shown in Fig. 20 in comparison with Fig. 19 showing that in the case that the circular conductor plate were removed, so that it is evident from these drawings that the effect of magnetic fluxes similarly as shown in Figs. 17 and 18 as for the outer unitary element can be obtained as for the inner unitary element also. In this connection, Figs. 19 and 20 show the situation in the case that the thickness of the circular conductor plate consisting in the inner unitary element is uniform.

As is apparent from the above description, in the converged magnetic flux type intense magnetic field electro-magnetic pump of the present invention, the efficiency and the peculiarity of the conveyance of molten metal can be remarkably improved only by evidently modifying the shape of the radial crosssection of the eddy current inducing circular conductor plate, and, as a result, the electro-magnetic pump suitable for the use of extremely large capacity with the remarkably large output amount can be readily realized and further it is possible also to realize a super-large scaled electro-magnetic pump applied with the similar principle.

In other words, the effects obtained by the present invention, in which, as for the previously proposed converged magnetic flux type electro-magnetic pump provided with the alternately repeated stack of the exciting spiral coils and the eddy current generating circular conductor plates individually having radial slits, the thickness of the portions around the central holes of the circular conductor plate is increased, so as to form the radial crosssection thereof in T-shape, are as follows.
(1) As for the eddy current generating circular conductor plate, eddy currents concentrated by the effect of the radial slit around the central hole are dispersed in the axial direction, so that the current density therein is reduced, so as to facilitate the prevention of local overheat conventionally caused by the concentration of eddy currents.
(2) The above-mentioned reduction of the current density in the surroundings of the central hole and hence the above-mentioned prevention of local overheat caused by the concentration of eddy currents around the central hole, which are effected by forming the radial crosssection of the circular conductor plate in T-shape, result in that it is facilitated to raise the voltage applied on the similarly scaled electro-magnetic pump and hence to increase the output amount thereof.
(3) In the situation that the radial crosssection of the circular conductor plate is formed in T-shape, the concentratedly flowing eddy currents are dispersed along the non-magnetic metal pipe in the axial direction, so that the leakage magnetic fluxes passing through the surroundings of the central hole of the circular conductor plate from the teeth-like portions of the magnetic material frame surrounding the unitary elements individually formed of the alternate stack of exciting spiral coils and circular conductor plates are reduced and hence the effective magnetic fluxes passing through the gap between double-structured pipes are increased as much as the reduction of leakage magnetic fluxes, and, as a result, the thrust affecting molten metal is increased and hence the output amount is increased also, so as to improve the efficiency of conveyance.
(4) In the intense magnetic field intense magnetic field electro-magnetic pump according to the present invention, the inner diameter of the exciting spiral coils alternately stacked on the circular conductor plates is formed larger than that of the central hole of the circular conductor plate, so as to prevent the heat conduction from high temperature molten metal conveyed in the non-magnetic material pipe passing through the central hole. Accordingly, even when the thickness of the portion surrounding the central hole of the circular conductor plate is increased, so as to form the radial crosssection thereof in T-shape, any influence is not affected at all on the remaining parts of the pump in view of mutual relation of those sizes.

## Claims

1. A converged magnetic flux type intense magnetic field electro-magnetic pump comprising a plurality of exciting spiral coils (1) wound in the same polarity and connected to each other, a plurality of circular conductor plates (2) inserted between respective pairs of the exciting spiral coils (1) and provided with respective radial slits (4) reaching respective outer peripheries thereof and respective central holes (3) coaxially aligned, a plurality of substantially U-shaped magnetic frames (6) surrounding respective outer peripheries of cross-section of the coils (1) and plates (2) for forming closed magnetic circuits through the central holes (3), so as to provide respective unitary magnetic flux generating elements, a plurality of the unitary magnetic flux generating elements being arranged close to each other in the common axial direction of the central holes (3), axially traveling magnetic fluxes being generated in the central holes (3) by converging eddy currents generated in the circular conductor plates (2) in response to multi-phase alternate currents applied to the coils (1) into the central portions surrounding the central holes (3) along the radial slits (4), other traveling magnetic fluxes generated in the said closed magnetic circuits being superposed in phase on the traveling magnetic fluxes in the central holes (3), and
the mutually superposed magnetic fluxes being converged by co-axially magnetic flux converging means partially forming the said closed magnetic circuits inside a non-magnetic pipe (7) passing through the central holes (3), so as to apply an axial thrust on molten metal in the non-magnetic pipe (7), the thickness of the central portions (10) of the circular conductor plates (2) being increased so as to form a radial cross-section which is substantially T-shaped.

2. A converged magnetic flux type intense magnetic field electro-magnetic pump as claimed in claim 1, in which the magnetic flux conveying means comprises a cylindrical magnetic core (8).

3. A converged magnetic flux type intense magnetic field electro-magnetic pump as claimed in claim 1, in which the non-magnetic pipe (7) is coaxial with another non-magnetic pipe (13), in which a plurality of other exciting spiral coils (15) coaxial with each other and respectively corresponding to the said unitary magnetic flux generating members and wound in the same polarity with each other are arranged, other substantially U-shaped magnetic frames (14) respectively surrounding the said other coils (15) and forming closed magnetic circuits through the said central holes being individually provided, so as to provide the magnetic flux converging means by superposing still other traveling magnetic fluxes, which are generated in the said central holes in the axial direction by applying multi-phase alternate currents on the plurality of said other coils (15), on the said traveling magnetic fluxes in phase with each other.

4. A converged magnetic flux type intense magnetic field electro-magnetic pump as claimed in claim 3, in which a plurality of other circular conductor plates (17), the thickness of peripheral portions of which is increased, so as to form a radial cross-section which is substantially T-shaped, are inserted between respective pairs of the said other exciting spiral coils (15).

## Patentansprüche

1. Elektromagnetische Pumpe mit intensivem Magnetfeld in Konvergenzmagnetflußausführung, die aufweist: eine Vielzahl von Erregerspiralspulen (1), die in der gleichen Polarität gewickelt und miteinander verbunden sind; eine Vielzahl von kreisförmigen Leiterplatten (2), die zwischen den betreffenden Paaren der Erregerspiralspulen (1) eingesetzt werden, und die mit entsprechenden radialen Schlitzen (4) versehen sind, die deren entsprechenden äußeren Umfänge und die entsprechenden mittigen Löcher (3), die koaxial ausgerichtet sind, erreichen; eine Vielzahl von im wesentlichen U-förmigen Magnetrahmen (6), die die entsprechenden äußeren Umfänge des Querschnittes der Spulen (1) und der Platten (2) umgeben, um geschlossene magnetische Kreise durch die mittigen Löcher (3) zu bilden, um somit die entsprechenden unitären Elemente für die Erzeugung des Magnetflusses zu liefern; eine Vielzahl von unitären Elementen für die Erzeugung des Magnetflusses, die dicht beieinander in der üblichen axialen Richtung der mittigen Löcher (3) angeordnet sind, wobei die sich axial bewegenden Magnetflüsse in den mittigen Löchern (3) dadurch erzeugt werden, daß die Wirbelströme konvergieren, die in den kreisförmigen Leiterplatten (2) als Reaktion auf die mehrphasigen Wechselströme, die an die Spulen (1) angelegt werden, in den mittleren Abschnitten erzeugt werden, die die mittigen Löcher (3) längs der radialen Schlitze (4) umgeben, wobei die anderen sich bewegenden Magnetflüsse, die in den geschlossenen magnetischen Kreisen erzeugt werden, in Phase auf die sich bewegenden Magnetflüsse in den mittigen Löchern (3) überlagert werden, und wobei die sich gegenseitig überlagernden Magnetflüsse durch die koaxiale Magnetflußkonvergenz-einrichtung konvergiert werden, die teilweise die geschlossenen magnetischen Kreise im Inneren eines nichtmagnetischen Rohres (7) bildet, das durch die mittigen Löcher (3) hindurchgeht, um eine Axialbelastung auf das geschmolzene Metall im nichtmagnetischen Rohr (7) anzuwenden, wobei die Dicke der mittleren Abschnitte (10) der kreisförmigen Leiterplatten (2) vergrößert wird, um somit einen radialen Querschnitt zu bilden, der im wesentlichen T-förmig ist.

2. Elektromagnetische Pumpe mit intensivem Magnetfeld in Konvergenzmagnetflußausführung nach Anspruch 1, bei der die Magnetflußkonvergenzeinrichtung einen zylindrischen Magnetkern (8) aufweist.

3. Elektromagnetische Pumpe mit intensivem Magnetfeld in Konvergenzmagnetflußausführung nach Anspruch 1, bei der das nichtmagnetische Rohr (7) mit einem weiteren nichtmagnetischen Rohr (13) koaxial ist; bei der eine Vielzahl von weiteren Erregerspiralspulen (15) koaxial zueinander angeordnet sind und bzw. den unitären Elementen für die Erzeugung des Magnetflusses entsprechen und in der gleichen Polarität gewickelt sind; und bei der weitere im wesentlichen U-förmige Magnetrahmen (14) einzeln zur Verfügung gestellt werden, die entsprechend die anderen Spulen (15) umgeben und geschlossene magnetische Kreise durch die mittigen Löcher bilden, um die Magnetflußkonvergenzeinrichtung bereitzustellen, indem noch weitere sich bewegende Magnetflüsse, die in den mittigen Löchern in der axialen Richtung durch Anlegen von mehrphasigen Wechselströmen an die Vielzahl der anderen Spulen (15) erzeugt werden, auf die sich bewegenden Magnetflüsse in Phase zueinander überlagert werden.

4. Elektromagnetische Pumpe mit intensivem Magnetfeld in Konvergenzmagnetflußausführung nach Anspruch 3, bei der eine Vielzahl von weiteren kreisförmigen Leiterplatten (17), bei denen die Dicke der Umfangsabschnitte erhöht wird, um einen radialen Querschnitt zu bilden, der im wesentlichen T-förmig ist, zwischen den entsprechenden Paaren der anderen Erregerspiralspulen (15) eingesetzt wird.

## Revendications

1. Pompe électromagnétique à champ magnétique intense du type à flux magnétique convergent comprenant plusieurs bobines d'excitation en spirale (1) enroulées selon la même polarité et connectées les unes aux autres, plusieurs plaques conductrices circulaires (2) insérées entre les paires respectives de bobines d'excitation en spirale (1) et comportant des fentes radiales respectives (4), atteignant respectivement des périphéries externes correspondantes et des trous centraux respectifs (3) alignés coaxialement, plusieurs carcasses magnétiques (6) ayant pratiquement une forme en U entourant les périphéries externes respectives de la section des bobines (1) et des plaques (2) pour former des circuits magnétiques fermés à travers les trous centraux (3), de sorte à constituer des éléments unitaires respectifs générateurs de flux magnétique, plusieurs des éléments unitaires générateurs de flux magnétique étant agencés les uns près des autres dans la direction axiale commune des trous centraux (3), des flux magnétiques axialement mobiles étant produits dans les trous centraux (3) en faisant converger des courants de Foucault produits dans les plaques conductrices circulaires (2) en réponse à l'application de courants alternatifs polyphasés aux bobines (1), dans les parties centrales entourant les trous centraux (3) le long des fentes radiales (4), d'autres flux magnétiques mobiles produits dans lesdits circuits magnétiques fermés étant superposés en phase aux flux magnétiques mobiles dans les trous centraux (3), la convergence des flux magnétiques mutuellement superposés étant assurée par un moyen coaxial de convergence des flux magnétiques, formant en partie lesdits circuits magnétiques fermés à l'intérieur d'un tuyau non magnétique (7) traversant les trous centraux (3), de sorte à appliquer une poussée axiale sur le métal fondu dans le tuyau non magnétique (7), l'épaisseur des parties centrales (10) des plaques circulaires conductrices (2) étant accrue pour que leur section radiale présente pratiquement une forme en T.

2. Pompe électromagnétique à champ magnétique intense du type à flux magnétique convergent selon la revendication 1, dans laquelle le moyen de convergence du flux magnétique comprend un noyau magnétique cylindrique (8).

3. Pompe électromagnétique à champ magnétique intense du type à flux magnétique convergent selon la revendication 1, dans laquelle le tuyau non magnétique (7) est coaxial à un autre tuyau non magnétique (13), comportant plusieurs autres bobines d'excitation en spirale (15) coaxiales les unes aux autres et correspondant respectivement auxdits éléments unitaires générateurs de flux magnétique, enroulées dans la même polarité les unes avec les autres, d'autres carcasses magnétiques, ayant pratiquement une forme en U (14) entourant respectivement lesdites autres bobines (15) et formant des circuits magnétiques fermés à travers lesdits trous centraux, étant agencées individuellement, de sorte à constituer le moyen de convergence des flux magnétiques, en superposant encore d'autres flux magnétiques mobiles, produits dans lesdits trous centraux dans la direction axiale par suite de l'application de courants alternatifs polyphasés, auxdites plusieurs autres bobines (15), auxdits flux magnétiques mobiles en phase les uns avec les autres.

4. Pompe électromagnétique à champ magnétique intense du type à flux magnétique convergent selon la revendication 3, dans laquelle plusieurs autres plaques conductrices circulaires (17), dont l'épaisseur des parties périphériques est accrue, de sorte à présenter une section radiale ayant pratiquement une forme en T, sont insérées entre les paires respectives desdites autres bobines d'excitation en spirale (15).
